# EUROPEAN PATENT APPLICATION

(11) **EP 1 788 689 A1**
(43) Date of publication of application: **23.05.2007**
(21) Application number: 06023750.0
(22) Date of filing: 15.11.2006
(51) Int. Cl.: H02K 1/22, D06F 37/30

(54) **Induction motor for a drum washing machine**

(30) Priority: 18.11.2005 KR 20050110837
(71) Applicant: LG ELECTRONICS INC., Youngdungpo-gu Seoul 150-721 (KR)
(72) Inventor: Jun, Cha Seung, Seoul (KR); Min, Byoung Wook, Seoul (KR)
(74) Representative: Vossius & Partner

(57) **Abstract**

An induction motor (100) for a drum washing machine and a drum washing machine using the same are disclosed. An induction motor (100) for a drum washing machine includes: a concentrated winding stator (300) with a plurality of teeth (301) that project from a circumference thereof and a coil (350) wounded around each tooth (301); a rotor frame (210) connected to a shaft (4) directly fixed to a rotatable drum (3) in the drum washing machine, wherein the concentrated winding stator (300) is located in the rotor frame (210); and a rotor conductor (220) that generates induced currents in closed circuits along a circumferential direction of the rotor frame (210) when electric currents are applied to the coils (350) so that the rotor frame (210) rotates, wherein the closed circuit is skewed.

## Description

This application claims the benefit of Korean Patent Application No. 10-2005-0110837, filed on November 18, 2005, which is hereby incorporated by reference for all purposes as if fully set forth herein.

The present invention relates to a washing machine, more particularly, to an induction motor for a washing machine that can reduce vibration and noise as well as production cost.

In general, drum washing machines may be classified as indirect drive drum washing machines and direct drive drum washing machines. The former indirectly transmits a driving force of a motor to a drum via a motor pulley and a drum pulley, and the latter directly connects a rotor of a motor to a drum to transmit the driving force of the motor to the drum.

The indirect drive drum washing machine has a problem with energy loss and noise during the transmission of the driving force. Thus, to solve this problem of the indirect drive drum washing machine, the direct drive drum washing machine recently has been more widely used. The direct drive drum washing machine has a motor mounted to a rear wall of a tub to directly transmit the driving force of the motor to the drum.

A motor in the conventional direct drive drum washing machine includes a rotor connected to a shaft of a drum, a permanent magnet on the rotor, and a stator wound with a coil. A conventional motor has a problem where it costs a lot to fabricate the motor and a washing machine, because the conventional motor needs an expensive permanent magnet.

The permanent magnet is installed around the circumference of the rotor with alternating magnetic poles along a circumferential direction of the rotor. When the rotor rotates, the permanent magnet interacts with space between teeth of the stator, that is, with a slot of the stator, such that cogging torque is generated. Moreover, a conventional motor with a permanent magnet has another problem where the efficiency may deteriorate due to mechanical vibration and torque ripple caused by frequency harmonics.

Meanwhile, a hall sensor should be provided in the conventional motor with a permanent magnet to detect the position of the rotor. Also, an algorithm that determines the position of the rotor is necessary when the motor is operated. Also, the position of the rotor should be controlled according to the phase of supplied voltage. Thus, this results in another problem where the cost of motor is high and the control of motor is complex.

Accordingly, the present invention is directed to an induction motor for a drum washing machine and a washing machine using the same that substantially obviates one or more of the problems due to limitations and disadvantages of the related art.

An advantage of the present invention is to provide an induction motor for a drum washing machine that reduces the production cost.

Another advantage of the present invention is to provide an induction motor for a drum washing machine and a drum washing machine that reduces vibration and noise.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the invention, as embodied and broadly described herein, an induction motor for a drum washing machine includes: a concentrated winding stator with a plurality of teeth that project from a circumference thereof and a coil wounded around each tooth; a rotor frame connected to a shaft directly fixed to a rotatable drum in the drum washing machine, wherein the concentrated winding type stator is located in the rotor frame; and a rotor conductor that generates induced currents in closed circuits along a circumferential direction of the rotor frame when electric currents are applied to the coils so that the rotor frame rotates, wherein the closed circuit is skewed.
In another aspect of the present invention, a drum washing machine includies: a tub that holds washing solution therein; a drum that rotates within the tub; a concentrated winding stator with a plurality of teeth that project from a circumference thereof and a coil wounded around each tooth, the concentrated winding stator fixed to a rear wall of the tub; a shaft directly connected to the drum, passing through the rear wall of the tub; a rotor frame directly connected to the shaft, wherein the concentrated winding type stator is located in the rotor frame; and a rotor conductor that generates induced currents in closed circuits along a circumferential direction of the rotor frame when electric currents are applied to the coils so that the rotor frame rotates, wherein the closed circuit is skewed

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this specification, illustrate embodiment(s) of the invention and together with the description serve to explain the principle of the invention.

In the drawings:

FIG. 1 is a diagram schematically illustrating a drum washing machine including an induction motor according to the present invention;

FIG. 2 is a plan view of the induction motor according to the present invention;

FIG. 3 is a sectional view along the line I-I of the motor shown in FIG. 2;

FIG. 4 is a plan view partially illustrating a stator core of the induction motor shown in FIG. 3;

FIG. 5 is a front view illustrating another embodiment of a rotor conductor of the induction motor according to the present invention shown in FIG. 3;

FIG. 6 is a front view illustrating still another embodiment of the rotor conductor of the induction motor according to the present invention; and

FIG. 7 is a block diagram illustrating a parallel wiring of the induction motor according to the present invention.

Reference will now be made in detail to an embodiment of the present invention, examples of which are illustrated in the accompanying drawings. Wherever possible, the same reference numbers will be used throughout the drawings to refer to the same or like parts.

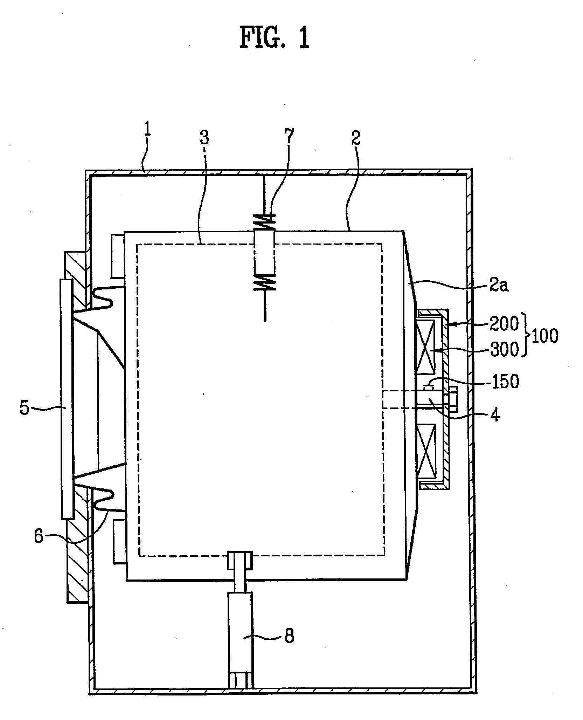

FIG. 1 is a diagram schematically illustrating a drum washing machine including an induction motor according to the present invention. As shown in FIG. 1, the drum washing machine includes a tub 2 provided within a cabinet 1, a drum 3 rotatably installed within the tub 2, a shaft 4 fixed to a rear wall of the drum 3 passing through a rear wall of the tub 2, and a motor 100 provided at the rear of the tub 2 to operate the drum 3. The motor 100 is also connected to the shaft 4. A door 5 is coupled to a front of the cabinet 1, and a gasket 6 is provided between the door 5 and the tub 2. Furthermore, the washing machine has a hanging spring 7 between an inner upper surface of the cabinet 1 and an upper surface of the tub 2 to suspend the tub 2 within the cabinet 1. Also, a friction damper 8 is provided between a lower portion of the cabinet 1 and a lower outer surface of the tub 2 to attenuate vibration of the tub 2 generated by spinning the laundry.

The motor 100 may be a Brushless DC (BLDC) motor. The motor 100 includes a stator 300 fixed to the rear wall 2a of the tub 2 and a rotor 200 coupled to the shaft 4 to directly rotate the drum 3. The motor 100 of the present invention directly transmits its driving force to the drum 3 via the shaft 4 directly connected to the drum 3 and the rotor 200 and not via an auxiliary pulley or belt in the prior art.

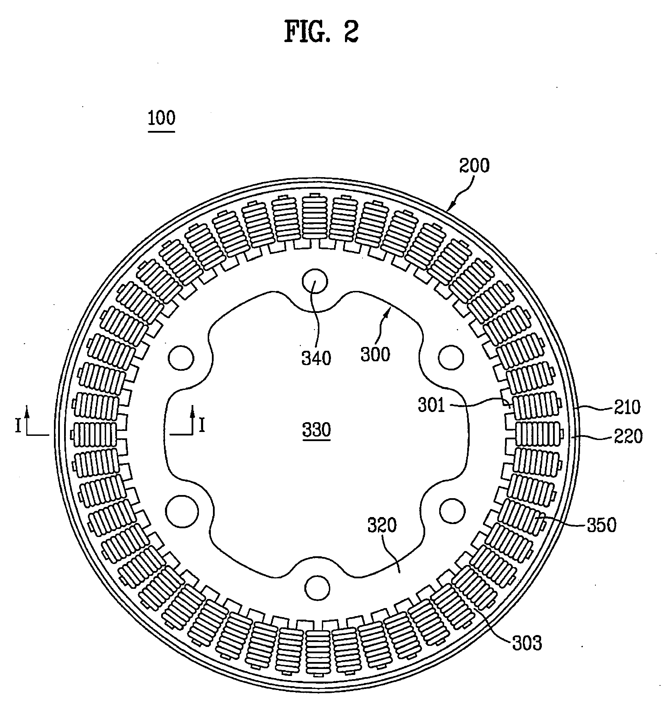

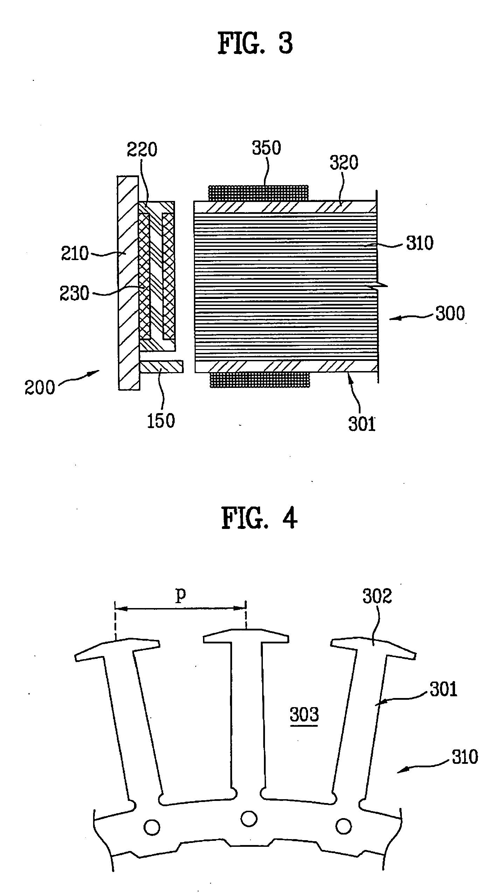

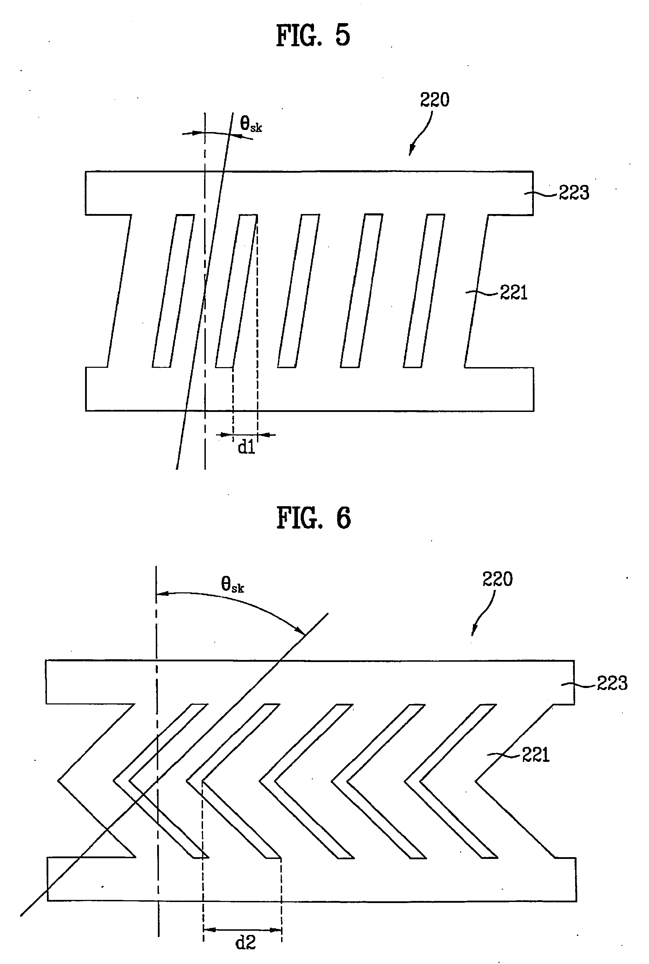

Referring to FIGS 2 to 4, the structure of the motor 100 will be described in detail. FIG. 2 is a plan view of the induction motor according to the present invention, FIG. 3 is a sectional view along the line I-I of the motor shown in FIG. 2, and FIG. 4 is a plan view partially illustrating a stator core of the induction motor shown in FIG. 3.

As shown in FIG. 3, the stator 300 includes a stator core 310 and an insulator 320. Thin conductor plates are stacked or a long and thin conductor band is wound in a spiral shape to form a multi-layered stator core 310. The insulator 320 is attached to an upper surface and a lower surface of the stator core 310. An opening 330 is formed in the center of the stator 300 to allow the shaft 4 to pass through the stator 300, and a plurality of fastening holes 340 are formed along a circumference of the opening 330. The stator 300 is secured to the rear wall 2a of the tub 2 by a fastener such as a bolt and the fastening hole 340.

As shown in FIG. 4, a plurality of teeth 301 project from the circumference of the stator 300 in a radial direction. The pitch of the teeth is the distance between the centers of adjacent teeth and is illustrated as "p" in FIG. 4. A pole shoe 302, at the end of the tooth 301 has two opposite ends that project in a circumferential direction relative to the stator 300 to partially cover a slot 303 that is a space between the teeth 301. Also, it is preferred that the middle portion of the pole shoe 302 is thicker than the two opposite ends of the pole shoe 302. When the pole shoe 302 has this shape, the air gap between the inner surface of the rotor 200 and the pole shoe 302 of the stator 300 may maintain a substantially constant value. Thus, when the rotor 200 rotates, the interaction between the rotor 200 and the stator 300 may vary little to prevent the air gap from abruptly changing. As a result, vibration and noise may be reduced.

A coil 350 is wound around each tooth 301, and it is preferred that the coil 350 is a concentrated winding. That is, the coil 350 is wound around each tooth 301 of the stator 300 so that the number of slots corresponding to each pole, formed when electrical power is applied to the coil 350 wound around the each tooth, is 1 or less than 1. Hence, although the stator core 310 having a small number of the teeth 301 is used, a lot of magnetic poles may be formed. When a concentrated winding is employed to the motor 100, the stator 300 may be small in size, compared to a dispersed winding. Also, it is easier to control the motor using an inverter due to the increased number of the magnetic poles.

Meanwhile, as shown in FIG, 1, the rotor 200 surrounds the stator 300. The rotor 200 includes a rotor frame 210 that has a cup shape. Also, as shown in FIG. 1, the shaft 4 is fixed to a rear wall of the rotor frame 210, and a side wall of the rotor frame 210 encompasses the stator 300.

The motor 100 for a drum washing machine of the present invention is an induction motor, and accordingly, the rotor 200 includes a rotor conductor 220 to generate induced currents when electric currents are applied to the coil 350 instead of a permanent magnet. Here, the rotor conductor 220 is attached to an inner surface of the side wall of the rotor frame 210 that faces the teeth 301 of the stator 300 wound by the coil 301. Moreover, the side wall of the rotor 200 includes a rotor core 230 to form a magnetic flux path. FIG. 3 illustrates that the rotor conductor 220 is arranged along the inner surface of the side wall of the rotor frame 210 to have an "I" shaped cross-section and that the rotor cores 230 are arranged on opposite sides of the rotor conductor 220.

For example, the rotor conductor 220 may be made of aluminum or copper and formed substantially as one body with the rotor core 230 by die-casting. Because aluminum or copper has little electric resistance and relatively less strength than a conventional material, such as steel, used to make the rotor core 230, the rotor conductor 220 may be easily attached to the rotor core 230 by process such as die-casting.

Alternatively, the rotor conductor 220 may be formed in another embodiment, unlike the one shown in FIG. 3. FIGS. 5 and 6 illustrate other embodiments of the rotor conductor 220 that will be described below.

A rotor conductor 220 as shown in FIGS. 5 and 6 is formed of a thin plate along an inner circumferential surface of a rotor core 230 attached to an inner surface of a side wall of the rotor frame 210 to face the stator 300. Because the coil 350 of the induction motor 100 according to the present invention is a concentrated winding, multiple-magnetic poles are alternatively formed along the circumferential direction of the stator 300.

Thus, the induction motor of the present invention might generate torque ripple or mechanical vibration due to cogging torque, overlapped phase, or frequency harmonics that may be generated by interaction between the slot 303 of the stator 300 and the rotor 200. However, this problem arises much less than in conventional motors having permanent magnets. In spite of the reduction of torque ripple, it is desirable to reduce even minute torque ripple.

As shown in FIG. 5, the rotor conductor 220 has a vertical member 221 may be skewed with respect to a horizontal member 223. The rotor conductor 220 has two horizontal members 223 in parallel along a circumferential direction and a plurality of vertical members 221 are spaced apart by a predetermined distance and extend between the horizontal members 223 to connect the horizontal members 223 to each other.

Two adjacent vertical members 221 and the two horizontal members 223 form one closed circuit. Each closed circuit is skewed, and the skew distance "d1" indicates how much each closed circuit is skewed. The skew distance"d1" corresponds to one pitch of the teeth 301. Because, the vertical member 221 of the rotor conductor 220 is skewed at a predetermined angle(θₛₖ), there is a skew distance "d1" between an upper end and a lower end of the vertical member 221 as shown in FIG. 5. The skew distance "d1" is equal to about one pitch "p" of the teeth 301.

As shown in FIG. 6 illustrating the other embodiment of the rotor conductor 220, each closed circuit is symmetrically skewed about the center of the circuit, and the skew distance "d2" indicates how much each closed circuit is skewed. The skew distance "d2" falls within about one to two of the pitch of the teeth 301, i.e, p ≤ d2 ≤ 2xp. Because, a middle portion of the vertical member 221 is projected and each closed circuit is as skewed symmetrically in a vertical direction, the skew distance "d2" is the distance between the middle portion and an upper or lower end as shown in FIG. 6.

When the rotor conductor 220 is skewed as shown in FIGS. 5 and 6, the interaction between the rotor 200 and the slot 303 of the stator 300 may be prevented from changing abruptly. Thereby, torque ripple, cogging torque and mechanical vibration may be reduced.

The rotor frame 210 may also include a permanent magnet 150. The permanent magnet 150 is for detecting a position of the rotor 200 and the rotor speed. A hall sensor (not shown) may be provided on a circumference of the stator 300 to sense a magnetic field of the permanent magnet 150.

The permanent magnet 150, as shown in Fig. 1, may be also placed on the shaft 4, different from the above. In this case, the hall sensor for detecting the magnetic field of the permanent magnet 150 might be at an inner circumference of the stator 300. This has the advantage of resulting in a smaller motor 100 because the space for fixing the hall sensor to an outer portion of the stator 300 is not needed.

Next, the operation of the induction motor according to the present invention will be described.

When three phase voltage is applied to the coil 350 of the stator 300 via an inverter, a rotational magnetic field is generated in the stator 300. Hence, the rotor conductor 220 generates an induced voltage that produce induced currents and the rotor 200 starts to rotate due to the interaction between the rotational magnetic field and the induced currents.

When the rotor 200 rotates, the hall sensor (not shown) senses the magnetic field of the permanent magnet 150 and a controller (not shown) finds out the position and rotation speed of the rotor 200 by using the information sensed by the hall sensor. The controller (not shown) controls the inverter based on the position and rotation speed of the rotor 200 to control the motor 100 more precisely.

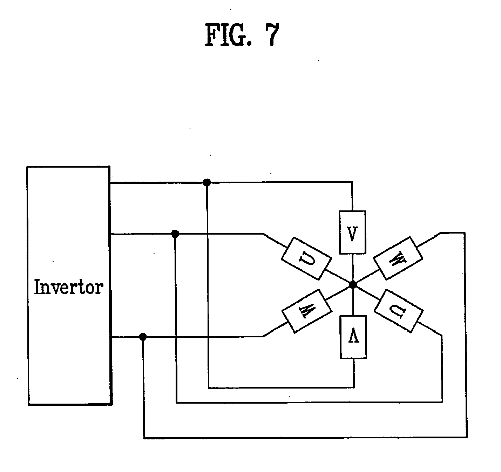

Meanwhile, as shown in FIG. 7, a connection structure of the coil provided on the stator, which forms each phase separately, may be changed into a parallel connection structure. That is, high torque should be generated by high electric currents to operate the motor at a high speed, and the size of the electric current is limited in a serial connection structure due to high resistance. As a result, it is difficult to produce high torque as well as operate the motor at a high speed.

Accordingly, to solve the above problem, as shown in FIG. 7, a parallel connection structure is used for the coil provided on the stator 300. In the parallel connection structure, the resistance value of the parallel connection is smaller than a resistance value of a serial connection so that high electric currents may be applied to the coils.

An embodiment of the rotor 200 has been described where the rotor 200 has a cup shape to cover the stator 300. However, the rotor 200 may have a cage shape, like in a conventional induction motor.

As mentioned before, the present invention has the following advantages.

First, because the induction motor for a direct driven drum washing machine is provided and not a permanent magnet motor which costs much more, production cost for a washing machine may be reduced.

Second, because cogging torque and high frequency harmonics generated by a permanent magnet is reduced, vibration and noise caused by torque ripple may be reduced.

Third, because the coil wound around the stator is a concentrated winding with a high number of magnetic poles, it is easier to control the motor.

Finally, because an auxiliary algorithm for determining the position of the rotor is not needed, the control algorithm for the motor may be simpler.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. An induction motor for a drum washing machine comprising:
a concentrated winding stator with a plurality of teeth that project from a circumference thereof and a coil wounded around each tooth;
a rotor frame connected to a shaft directly fixed to a rotatable drum in the drum washing machine, wherein the concentrated winding stator is located in the rotor frame; and
a rotor conductor that generates induced currents in closed circuits along a circumferential direction of the rotor frame when electric currents are applied to the coils so that the rotor frame rotates, wherein the closed circuit is skewed.

2. The induction motor for a drum washing machine of claim 1, further comprising a rotor core on the rotor frame to form a magnetic flux path.

3. The induction motor for a drum washing machine of claim 2, wherein the rotor conductor and the rotor core are formed substantially as one body by die-casting.

4. The induction motor for a drum washing machine of claim 1, wherein the rotor conductor is a plate arranged on an inner surface of the rotor frame along a circumferential direction of the rotor frame.

5. The induction motor for a drum washing machine of claim 4, further comprising a rotor core that has a plate shape between the rotor frame and the rotor conductor to form a magnetic flux path.

6. The induction motor for a drum washing machine of any of claims 1 to 5, wherein a skew distance of each closed circuit is about equal to one pitch of the teeth, wherein the pitch of the teeth is the distance between the centers of adjacent teeth of the stator.

7. The induction motor for a drum washing machine of any of claims 1 to 5, wherein each closed circuit is skewed symmetrically with respect to a center thereof, wherein a skew distance of each closed circuit is in the range of about one to two pitches of the teeth, and wherein the pitch of the teeth is the distance between the centers of adjacent teeth of the stator.

8. The induction motor for a drum washing machine of any of claims 1 to 7, wherein the teeth of the stator include a pole shoe at an end of each tooth that has two opposite sides that project in a circumferential direction relative to the stator to partially cover a space between the teeth of the stator and wherein the two opposite ends are thinner than a central portion of the pole shoe.

9. The induction motor for a drum washing machine of any of claims 1 to 8, further comprising a permanent magnet fixed to the shaft to detect the position of the rotor frame and the rotation speed of the rotor frame.

10. A drum washing machine comprising:
a tub that holds washing solution therein;
a drum that rotates within the tub;
a concentrated winding stator with a plurality of teeth that project from a circumference thereof and a coil wounded around each tooth, the concentrated winding stator fixed to a rear wall of the tub;
a shaft directly connected to the drum, passing through the rear wall of the tub;
a rotor frame directly connected to the shaft, wherein the concentrated winding stator is located in the rotor frame; and
a rotor conductor that generates induced currents in closed circuits along a circumferential direction of the rotor frame when electric currents are applied to the coils so that the rotor frame rotates, wherein the closed circuit is skewed.
